(19)

Europäisches
Patentamt

European
Patent Office

Office européen
des brevets

(11) **EP 2 857 123 A1**

(12) **EUROPEAN PATENT APPLICATION**

(43) Date of publication:
08.04.2015 Bulletin 2015/15

(51) Int Cl.:
*B22F 1/00* *(2006.01)*       *F24J 2/48* *(2006.01)*

(21) Application number: 13290236.2

(22) Date of filing: 04.10.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **TOTAL MARKETING SERVICES**
  **92800 Puteaux (FR)**
• **Centre National de la Recherche Scientifique (CNRS)**
  **75016 Paris (FR)**

(72) Inventors:
• **Langlais, Mathieu**
  **95120 Ermont (FR)**
• **BEN-Abdallah, Philippe**
  **78125 Vieille Eglise en Yvelines (FR)**
• **BRU, Hélène**
  **92110 Clichy (FR)**
• **Besbes, Mondher**
  **91940 Les Ulis (FR)**

(74) Representative: **Croonenbroek, Thomas Jakob et al**
  **Innovincia**
  **11, avenue des Tilleuls**
  **74200 Thonon-les-Bains (FR)**

(54) **Light absorber**

(57)    The invention relates to a light absorber (11) comprising nanoparticles (13) in a host material (15) which is transparent in an absorbing range of the light absorber (11) and where the nanoparticles (13) exhibit plasmonic resonances within the absorbing range of the light absorber (11), wherein the dispersion of the nanoparticles (13) in the host material is controlled in such a way that the mean distance between said nanoparticles (13) is lower than the wavelengths of light in the absorbing range of the light absorber (11) for generating near field radiation interactions between said nanoparticles (13

FIG. 2

## Description

FIELD OF THE INVENTION

The invention relates to the engineering of the optical properties of materials and more specifically to the engineering of absorption properties.

BACKGROUND AND PRIOR ART

Solar receivers operate at high temperature and are fuelled by concentrated sunlight radiations. Their efficiency depends on the balance between sunlight radiations absorbed and infrared re-emission at operating temperature (i.e. the temperature required to insure proper heat transfer to the thermodynamic fluid circulated through the receiver).

Therefore, one problem relates to the design of an optical selective surface that can absorb as much as possible of the incoming radiation (visible spectrum - wide band spectrum) while radiating as low as possible in the infra-red range so as to improve the yield of heat transfer to the working fluid.

At present, in particular two types of wide-band selective absorbers are currently used in the thermo-solar domain.

A first type is based on metal-dielectric composites named cermets where absorption is insured by metallic particles dispersed in a ceramic matrix. Cermets are a special class of composite materials made of fine-grained mixtures of metallic nanoparticles randomly dispersed in dielectric host materials.

A second type is based on thin-films multilayers.

One may cite the following articles with respect to both:

> C.E. Kennedy - Review of Mid to High Temperature Solar Selective Absorber Materials - NREL - July 2002,
> G. D. Mahan, Phys. Rev. B 38, 14, 9500 (1988).
> M. Gomez, L. Fonseca and G; Rodriguez, Ferroelectrics Letters Section 2, 1, 17-24 (1984).
> S. Grésillon, L. Aigouy, A. C. Boccara, J. C. Rivoal, X.Quclin, C. Desmarest, P. Gadenne, V. A. Shubin, A. K. Sarychev, and V. M. Shalaev, Phys. Rev. Lett. 82, 4520 (1999).
> V. M. Shalaev and A. K. Sarychev, Phys. Rev. B 57, 13265 (1998).

In addition, metal-dielectric metamaterials structured at the subwavelength scale have been found very effective for wide band absorption but are not used due to their high fabrication costs (see ] K. Aydin, V. E. Ferry, R. M. Briggs and H. A. Atwater, Nat. Comms. 2, 5:17 (2011). See also S. Chen et al, Appl. Phys. Lett., 99, 253104 (2011); P. Zhu et al., Appl. Phys. Lett., 101, 241116 (2012); I. Massiot et al., Apppl. Phys. Lett. 101, 163901 (2012) ; "Design of a perfect black absorber at visible frequenscies using plamonic metamaterials", Hedayati, M.K.; Javaherirahim, M.; Mozooni, B.; Abdelaziz, R.;Tavassolizadeh, A.; Chakravadhanula, V.S.K.; Zaporojtchenko, V.; Strunkus, T.; Faupel, F.; Elbahri, M. Advanced Materials 2011, WILEY).

Furthermore resonant plasmonic structures have been developed to engineer the absorption spectra. These solutions are based on plasmonic resonances of stand-alone particles without any interactions between particles( see for example T.V. Teperik et al., Nat. Photonics 2, 299-301 (2008) ; A. Moreau, C. Ciraci, J.J. Mock, R. T. Hill, Q. Wang, B.J. Wiley, A. Chilkoti and D. R. Smith, Nature 492, 86-89 (2012) ; L. Li, K.-.Q. Peng, B. Hu, X. Wang, Y. Hu, X.-L. Wu, Appl. Phys. Lett., 100, 223902 (2012)).

It has to be noticed that none of the selective coatings already in use on Concentrated Solar Power (CSP) technologies can withstand the harsh operating conditions of solar central receivers (receivers used on solar tower under high irradiation fluxes, at very high temperature and under air).

In addition, structured meta-materials have very high fabrication costs and so are not envisaged for large scale equipment.

Consequently, there is a real need for a new approach of a light absorber, in particular for solar receivers.

For this purpose, the invention proposes light absorber comprising nanoparticles in a host material which is transparent in an absorbing range of the light absorber and where the nanoparticles exhibit plasmonic resonances within the absorbing range of the light absorber, wherein the dispersion of the nanoparticles in the host material is controlled in such a way that the mean distance between said nanoparticles is lower than the wavelengths of light in the absorbing range of the light absorber for generating near field radiation interactions between said nanoparticles.

Thanks to the near field interaction, the absorption coefficient may be enhanced at a high level over a wide band of wavelength.

According to other features taken alone or in combination:

> When the absorbing range is in the visible range, the nanoparticles may be are metallic nanoparticles, for example made of silver and/or of gold.

When the absorbing range is in the infrared range, the nanoparticles may be polarized polar nanoparticles.

In one embodiment, the nanoparticles are for example at least of a first material and of a second material different from the first material.

In another embodiment, that might be combined with the previous one, the nanoparticles comprise nanoparticles of a first mean size and nanoparticles of a second mean size, different from the first mean size.

Thus, one disposes of several parameters that allow to shape and adapt the absorption curve of the absorber.

According to one aspect, the material, the size and the distribution of the nanoparticles is chosen to obtain a cutting wavelength, where light of higher wavelength than the cutting wavelength is less absorbed than light at shorter wavelengths with respect to the cutting wavelength.

This aspect is in particular interesting for solar receiver because losses due to infrared radiation of the absorber may be reduced enhancing thus the total efficiency of the absorber.

Furthermore the mean radius of said nanoparticle may be less than 100nm.

The nanoparticles may of spherical shape.

The invention also relates to a solar receiver for a solar thermic energy plant comprising a light absorber as described above.

Within the solar receiver, the light absorber is for example arranged as a layer having a backside in contact with a heat conducting medium.

## BRIEF DESCRIPTIONS OF THE DRAWINGS

Other advantages and characteristics will appear with the reading of the description of the following figures, among which:

- FIG. 1 is a schematic of a concentrated solar power plant,
- FIG. 2 is a schematic representation of a solar receiver in particular for a concentrated solar power plant as in figure 1,
- FIG. 3 shows a first example a distribution of nanoparticles of a unitary cell of an absorber according to the invention,
- FIG. 4 shows a top view of the unitary cell of figure 3,
- FIG. 5 shows in a diagram the absorption coefficient in function of the wavelength for an absorber having a unitary cell as shown in figures 3 and 4,
- FIG. 6 shows a second example a distribution of nanoparticles of a unitary cell of an absorber according to the invention,
- FIG. 7 shows a top view of the unitary cell of figure 6,
- FIG. 8 shows in a diagram the absorption coefficient in function of the wavelength for an absorber having a unitary cell as shown in figures 5 and 6,
- FIG. 9 shows a third example a distribution of nanoparticles of a unitary cell of an absorber according to the invention,
- FIG. 10 shows a top view of the unitary cell of figure 9,
- FIG. 11 shows in a diagram the absorption coefficient in function of the wavelength for an absorber having a unitary cell as shown in figures 9 and 10,

## DETAILED DESCRIPTION

On all the figures the same references refer to the same elements.

The filling factor f of a lattice can be defined by :

$$f = V\_part/V\_tot$$

Where V_tot = lx * ly * lz, is for example the volume of a unitary cell and V_part the volume occupied by the particles in the unitary cell.

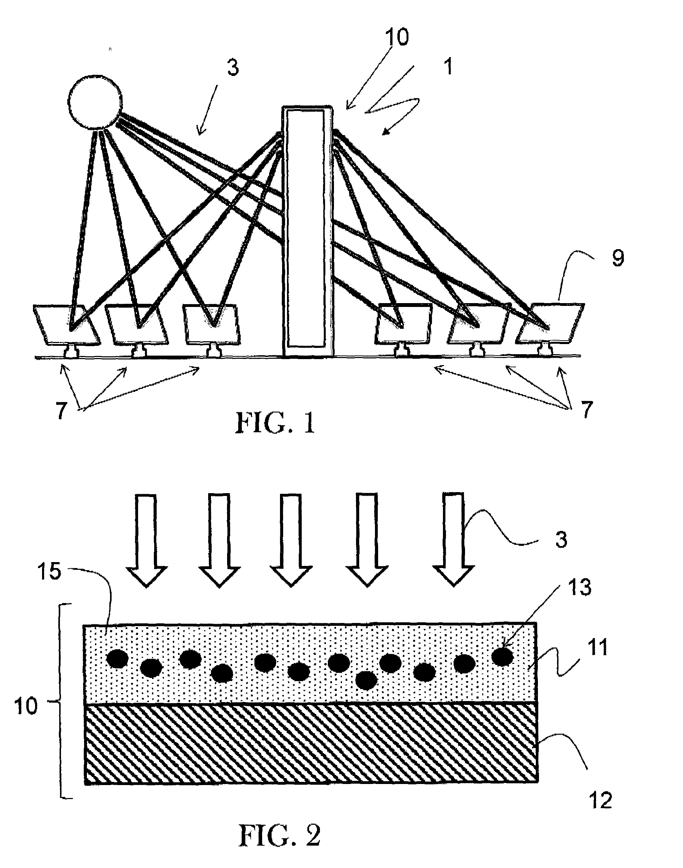

FIG.1 schematically illustrates an example of a schematic of a concentrated solar power (CSP) plant with a solar power tower 1.

In order to collect the sun rays 3 emitted by the sun 5, heliostats 7 supporting mirrors 9 that may be driven by motors in order to reflect and focus the incoming sun rays on a small area at the top of the solar sun power tower 1 are arranged around the solar power tower 1.

The concentrated heat energy may be used in a conventional power cycle or other heat engine to produce mechanical power that drives an electrical generator. CSP power plants can generate important amounts of power (hundreds of megawatts) for utility-scale applications.

In the top of the solar power tower 1 is arranged a solar receiver 10 comprising a light absorber 11 and a heat conducting medium 12 on the back of the light absorber 11.

The heat conducting medium 12 may be a heat conducting substrate like for example a high temperature nickel based super-alloy or a sintered silicon carbide supporting the high temperatures (for example above 650°C up to 1000°C or more) that may be generated through the absorption of concentrated sunlight and in contact with a heat conducting fluid like for example a molten salt.

The light absorber 11 comprises nanoparticles 13 in a host material 15 which is transparent in an absorbing range of the light absorber 11.

When the absorbing range is for example in the visible range (about 350nm to 700nm), the nanoparticles 13 are for example metallic nanoparticles, made for instance of silver and/or of gold. Aluminum, copper, titanium, chromium or platinum may also be used. In the visible absorption range, the host material 15 may be glass, quartz or transparent ceramic material. In other applications than for CSP plants, where the absorbing range is for example in the infrared range (larger than 800nm up to 30μm), the nanoparticles 13 may be polarized polar nanoparticles, for instance made of materials supporting surface phonon-polaritons in the operating frequency range of the absorbers. For exemple SiC particles (resonance around 10 microns) could be used in the mid-infrared.

In this case, the host material 15 may be for example a dielectric like SiO2.

The nanoparticles 13 may be only out of one type of material.

In another embodiment, nanoparticles 13 are at least of a first material, for example gold, and a second material different from the first material, for example silver. Examples with three or four types of different materials may also be envisaged.

In a further embodiment the nanoparticles 13 may comprise nanoparticle of a first mean size and nanoparticles of a second mean size, different from the first mean size.

The mean radius of said nanoparticles 13 may be less than 100nm.

Furthermore, the nanoparticles 13 are for example of spherical shape, or nearly spherical shape.

The material, size and shape of the nanoparticles 13 are chosen in order exhibit plasmonic resonances within the absorbing range of the light absorber, meaning that they exhibit plasmonic resonances as isolated nanoparticle.

In general, for an absorber operating in the wavelength range L$\lambda_{min}$; $\lambda_{max}$⌐, the size (radius) of nanoparticles is typically between $\lambda_{min}$/50 and $\lambda_{min}$.

The dispersion of the nanoparticles 13 in the host material 15 is controlled in such a way that the mean distance between said nanoparticles is lower than the wavelengths of light in the absorbing range of the light absorber for generating near field radiation interactions between said nanoparticles 13. In other words, the mean distance between nanoparticles is smaller than the attenuation length of surface modes supported by them.

The absorber may be obtained in a chemical way, with a coating of specialized molecules on the particles to control the distance between the nanoparticles 13. Another one is to put nanoparticles in a suspension and use a sol-gel deposition. It is also possible to deposit particles by CVD (chemical vapor deposition) with the help of chemical precursor or by laser ablation.

Through the interactions between the nanoparticles 13 (near field - strong interaction ; coupling of evanescent wave), these nanoparticles absorb at least an important part of the visible spectrum while not radiating much in the infrared range, which highly increases efficiency of the absorber, in particular for an application in a CSP plant.

Contrary to known multilayer structures already in use for selective absorbers operating at medium temperature (T<500°C), the nanoparticles 13 in the light absorber 11 are isolated from each other and from air by the host material 15, which avoids chemical interactions promoted at high temperature. There is no thin film interface that delaminates under operating conditions. Thus the absorber according to the invention may be used at very high temperatures even up to 1000°C.

Contrary to the absorbers already studied in the literature, the light absorber according to the invention creates and benefits from interaction modes between the nanoparticles 13 ("dressed absorption" concept). This allows the creation of multi resonant modes, promoting the absorption over a wide - yet controlled - range of wavelengths.

The collective interactions between the nanoparticles 13 allow to maintain a strong level of absorption even in diluted lattices where the filling factor f is below 3%. Indeed, the absorption cross section of the nanoparticles 13 is strongly enhanced by the presence of neighborhood nanoparticles 13 and their interactions.

Through the control of the material, the size and the distribution of the nanoparticles, a cutting wavelength may be obtained. The cutting wavelength may be defined as a wavelength where light of higher wavelength than the cutting wavelength is less absorbed than light at shorter wavelengths with respect to the cutting wavelength and the absorption coefficient decreases from the cutting wavelength to longer wavelengths.

With a proper selection of materials, the invention can so be used at very high temperature.

Some examples will be presented hereafter on the basis of a unitary cell of an n-ary lattice. Such a unitary cell has for example a 200nm respectively in x and y direction and 450nm in z direction. An example of a light absorber according the invention would be obtained through two-dimensional paving of the unitary cells.

In the examples, it has been chosen to have one gold nanoparticle 13-Au and one silver nanoparticle 13-Ag with a radius between 10 to 80nm and a minimal distance of at least 5nm between both nanoparticles. The nanoparticles 13 are immersed in a transparent material of refractive index n-1,5.

Example 1:

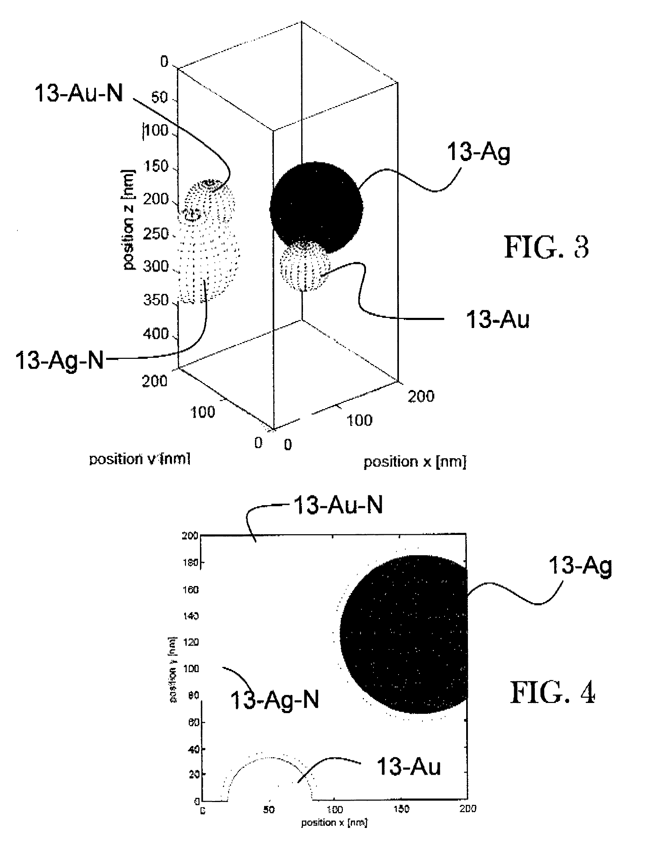

Figures 3 and 4 show an example where a cutting wavelength of 450nm is projected. Figure 3 shows the unitary cell as such and figure 4 shows a top view. One can see one gold nanoparticle 13-Au and one silver nanoparticle 13-Ag. 13-Au-N and 13-Ag-N designate a gold respectively silver nanoparticle having its center in a neighboring unitary cell, but extending in the unitary cell shown.

In this example, the position of the gold nanoparticle of 32nm radius is (x=51nm; y=0nm; z=217nm) and the position of the silver nanoparticle of 60nm radius is (x=165nm; y=125nm; z=229nm).

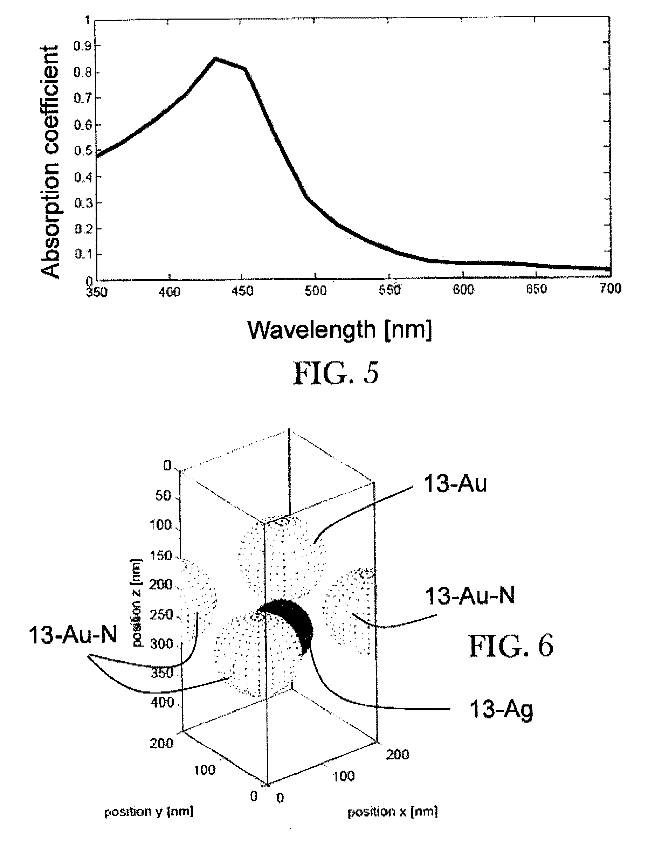

As can be seen in figure 5 showing the absorption coefficient in function of the wavelength of a n-ary lattice having a unitary cell as shown in figures 3 and 4, a cutting wavelength is obtained at 450nm.

Example 2 :

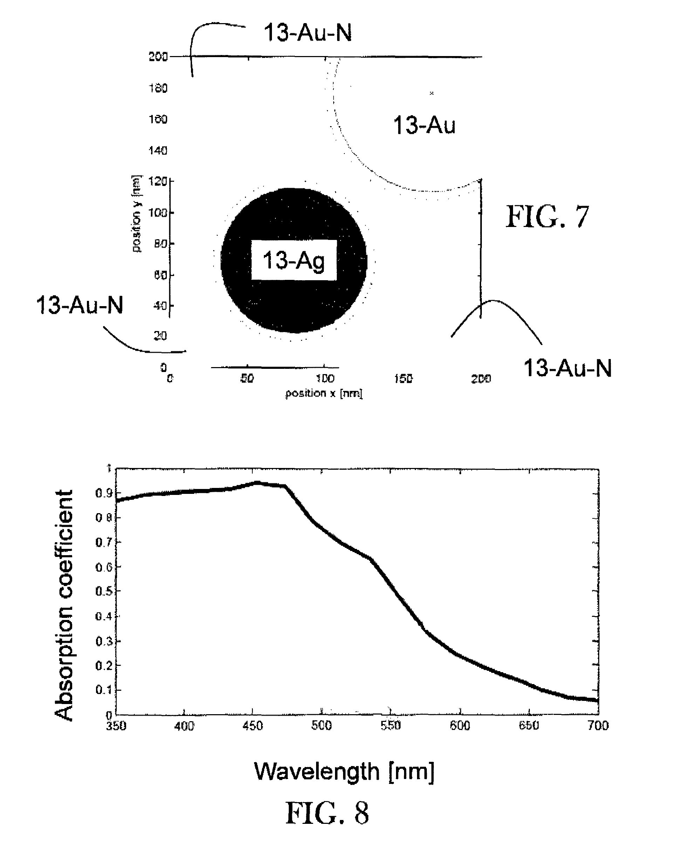

Figures 6 and 7 show an example where a cutting wavelength of 500nm is projected. Figure 6 shows the unitary cell as such and figure 7 shows a ) a top view One can see one gold nanoparticle 13-Au and one silver nanoparticle 13-Ag. 13-Au-N and 13-Ag-N designate a gold respectively silver nanoparticle having its center in a neighboring unitary cell, but extending in the unitary cell shown.

In this example, the position of the gold nanoparticle of 63nm radius is (x=168nm; y=177nm; z=197nm) and the position of the silver nanoparticle of 47nm radius is (x=80nm; y=69nm; z=241nm).

As can be seen in figure 8 showing the absorption coefficient in function of the wavelength of a n-ary lattice having a unitary cell as shown in figures 6 and 7, a cutting wavelength is obtained at 500nm. It can be seen that the absorption coefficient is quite high (above 80% for wavelengths less than 500nm) and nearly constant.

Example 3 :

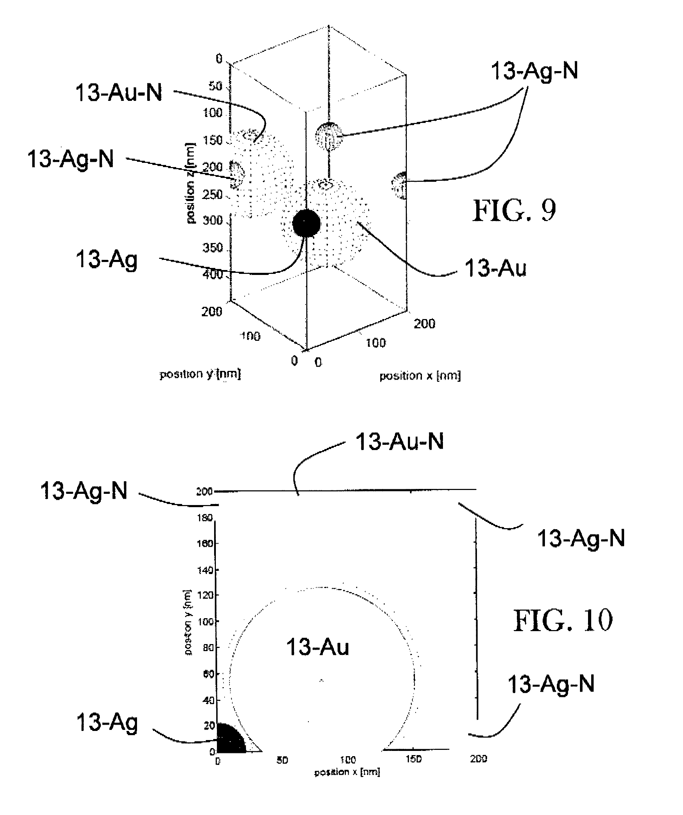

Figures 9 and 10 show an example where a cutting wavelength of 550nm is projected. Figure 9 shows the unitary cell as such and figure 10 shows a top view. One can see one gold nanoparticle 13-Au and one silver nanoparticle 13-Ag. 13-Au-N and 13-Ag-N designate a gold respectively silver nanoparticle having its center in a neighboring unitary cell, but extending in the unitary cell shown.

In this example, the position of the gold nanoparticle of 71nm radius is (x=81nm; y=54nm; z=257nm) and the position of the silver nanoparticle of 22nm radius is (x=0nm; y=0nm; z=205nm).

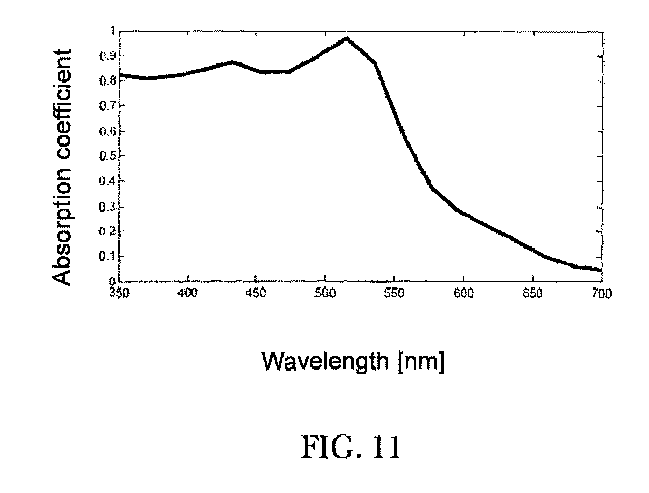

As can be seen in figure 11 showing the absorption coefficient in function of the wavelength of an n-ary lattice having a unitary cell as shown in figures 9 and 10, a cutting wavelength is obtained at 550nm. It can be seen that the absorption coefficient is quite high (above 80% for wavelengths less than 550nm) and nearly constant. In addition, the decrease of the absorption coefficient beyond 550nm is quite more pronounced.

On may understand that the light absorber according to the invention allows a quite efficient absorption in the projected absorption range and may be used at very high temperatures. Numerical simulations have shown that even light perturbation from a « perfect » lattice order with the unitary cells do only slightly impact the absorption curves shown in the examples above.

**Claims**

1. Light absorber (11) comprising nanoparticles (13) in a host material (15) which is transparent in an absorbing range of the light absorber (11) and where the nanoparticles (13) exhibit plasmonic resonances within the absorbing range of the light absorber (11), wherein the dispersion of the nanoparticles (13) in the host material is controlled in such a way that the mean distance between said nanoparticles (13) is lower than the wavelengths of light in the absorbing range of the light absorber (11) for generating near field radiation interactions between said nanoparticles (13).

2. Light absorber as to claim 1, where the absorbing range is in the visible range and where said nanoparticles (13) are metallic nanoparticles.

3. Light absorber as to claim 2, where said metallic nanoparticles (13) are made of silver and/or of gold.

4. Light absorber as to claim 1, where the absorbing range is in the infrared range and where said nanoparticles (13) are polarized polar nanoparticles.

5. Light absorber as to any of claims 1 to 4, where said nanoparticles (13) are at least of a first material and a second material different from the first material.

6. Light absorber as to any of claims 1 to 5, where said nanoparticles (13) comprise nanoparticles (13) of a first mean size and nanoparticles (13) of a second mean size, different from the first mean size.

7. Light absorber as to any of claims 1 to 6, where the material, the size and the distribution of the nanoparticles (13) is chosen to obtain a cutting wavelength, where light of higher wavelength than the cutting wavelength is less absorbed than light at shorter wavelengths with respect to the cutting wavelength.

8. Light absorber as to any of claims 1 to 7, where the mean radius of said nanoparticles (13) is less than 100nm.

9. Light absorber as to any of claims 1 to 8, where said nanoparticles (13) are of spherical shape.

10. Solar receiver for a solar thermic energy plant comprising a light absorber (11) as to any of claims 1 to 9.

11. Solar receiver as to claim 10, where said light absorber (11) is arranged as a layer having a backside in contact with a heat conducting medium (12).

FIG. 1

FIG. 2

FIG. 3

FIG. 4

FIG. 5

FIG. 6

FIG. 7

Wavelength [nm]

FIG. 8

13-Au-N

13-Ag-N

13-Ag-N

position z [nm]

13-Ag

13-Au

position y [nm]

position x [nm]

FIG. 9

13-Au-N

13-Ag-N

13-Ag-N

position y [nm]

13-Au

FIG. 10

13-Ag

13-Ag-N

position x [nm]

FIG. 11

Europäisches
Patentamt

European
Patent Office

Office européen
des brevets

**EUROPEAN SEARCH REPORT**

Application Number

EP 13 29 0236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/092221 A1 (DE MOURA DIAS MENDES MANUEL JOAO [ES] ET AL) 18 April 2013 (2013-04-18) | 1-4,8, 10,11 | INV. B22F1/00 F24J2/48 |
| Y | * paragraph [0002]; claim 46; figure 1 * * paragraph [0030] * * paragraph [0061] * * paragraph [0073] * * paragraph [0083] * * paragraph [0092] * * paragraph [0093] * ----- | 5-7,9 | |
| Y | WO 2009/105662 A1 (IMMUNOLIGHT LLC [US]; UNIV DUKE [US]; VO DINH TUAN [US]; BOURKE FREDER) 27 August 2009 (2009-08-27) * page 53, line 23 - line 26; claims 1, 46 * ----- | 5-7,9 | |
| A | WO 2006/122222 A2 (GEORGIA TECH RES INST [US]; EL-SAYED MOSTAFA A [US]; EL-SAYED IVAN HOM) 16 November 2006 (2006-11-16) * the whole document * ----- | 1 | TECHNICAL FIELDS SEARCHED (IPC) B22F F24J |

The present search report has been drawn up for all claims

| Place of search | Date of completion of the search | Examiner |
|---|---|---|
| The Hague | 6 February 2014 | Vesselinov, Vladimir |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 13 29 0236

This annex lists the patent family members relating to the patent documents cited in  the above-mentioned European search report.
The members are as contained in the European Patent Office EDP file on
The European Patent Office is in no way liable for these particulars which are merely given for the purpose of information.

06-02-2014

| Patent document cited in search report | | Publication date | Patent family member(s) | | Publication date |
|---|---|---|---|---|---|
| US 2013092221 | A1 | 18-04-2013 | NONE | | |
| WO 2009105662 | A1 | 27-08-2009 | AR | 070461 A1 | 07-04-2010 |
| | | | TW | 200946164 A | 16-11-2009 |
| | | | US | 2010003316 A1 | 07-01-2010 |
| | | | WO | 2009105662 A1 | 27-08-2009 |
| WO 2006122222 | A2 | 16-11-2006 | EP | 1899732 A2 | 19-03-2008 |
| | | | US | 2009326614 A1 | 31-12-2009 |
| | | | WO | 2006122222 A2 | 16-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C.E. KENNEDY.** Review of Mid to High Temperature Solar Selective Absorber Materials. *NREL,* July 2002
- **G. D. MAHAN.** *Phys. Rev. B,* 1988, vol. 38 (14), 9500
- **M. GOMEZ ; L. FONSECA ; G; RODRIGUEZ.** *Ferroelectrics Letters Section,* 1984, vol. 2 (1), 17-24
- **S. GRÉSILLON ; L. AIGOUY ; A. C. BOCCARA ; J. C. RIVOAL ; X.QUCLIN ; C. DESMAREST ; P. GADENNE ; V. A. SHUBIN ; A. K. SARYCHEV ; V. M. SHALAEV.** *Phys. Rev. Lett.,* 1999, vol. 82, 4520
- **V. M. SHALAEV ; A. K. SARYCHEV.** *Phys. Rev. B,* 1998, vol. 57, 13265
- **K. AYDIN ; V. E. FERRY ; R. M. BRIGGS ; H. A. ATWATER.** *Nat. Comms.,* 2011, vol. 2 (5), 17
- **S. CHEN et al.** *Appl. Phys. Lett.,* 2011, vol. 99, 253104
- **P. ZHU et al.** *Appl. Phys. Lett.,* 2012, vol. 101, 241116
- **I. MASSIOT et al.** *Apppl. Phys. Lett.,* 2012, vol. 101, 163901
- Design of a perfect black absorber at visible frequencsies using plamonic metamaterials. **HEDAYATI, M.K. ; JAVAHERIRAHIM, M. ; MOZOONI, B. ; ABDELAZIZ, R. ; TAVASSOLIZADEH, A. ; CHAKRAVADHANULA, V.S.K. ; ZAPOROJTCHENKO, V. ; STRUNKUS, T. ; FAUPEL, F. ; ELBAHRI, M.** Advanced Materials. WILEY, 2011
- **T.V. TEPERIK et al.** *Nat. Photonics,* 2008, vol. 2, 299-301
- **A. MOREAU ; C. CIRACI ; J.J. MOCK ; R. T. HILL ; Q. WANG ; B.J. WILEY ; A. CHILKOTI ; D. R. SMITH.** *Nature,* 2012, vol. 492, 86-89
- **L. LI ; K.-.Q. PENG ; B. HU ; X. WANG ; Y. HU ; X.-L. WU.** *Appl. Phys. Lett.,* 2012, vol. 100, 223902